# FASCICULE DE BREVET EUROPEEN

(11) **EP 2 578 495 B1**
(45) Date de publication et mention de la délivrance du brevet: **04.11.2015**
(21) Numéro de dépôt: 12306182.2
(22) Date de dépôt: 28.09.2012
(51) Int. Cl.: B64D 15/04, B64D 33/02, F02C 7/045, F02C 7/047, F02K 1/46

(54) **Panneau pour le traitement acoustique intégrant des canaux d'air chaud et au moins une chambre de stabilisation**
Paneel für die Geräuschdämmung, welches Heißluftkanäle und mindestens eine Stabilisierungskammer umfasst
Acoustic treatment panel including hot-air channels and at least one stabilising chamber

(30) Priorité: 03.10.2011 FR 1158893
(43) Date de publication de la demande: 10.04.2013
(73) Titulaire: Airbus Opérations SAS, 31060 Toulouse (FR)
(72) Inventeur: Porte, Alain, 31770 Colomiers (FR); Albet, Grégory, 31190 Grepiac (FR); Ring, Guillaume, 31200 Toulouse (FR); Galletti, Pascal, 31400 Toulouse (FR)
(74) Mandataire: Fantin, Laurent

(56) Documents cités:
- FR-A1- 2 917 067
- FR-A1- 2 941 675
- FR-A1- 2 952 032
- US-A- 3 933 327

## Description

La présente invention se rapporte à un panneau pour le traitement acoustique intégrant des canaux d'air chaud et au moins une chambre de stabilisation.

Un ensemble propulsif d'aéronef comprend une nacelle dans laquelle est disposée de manière sensiblement concentrique une motorisation.

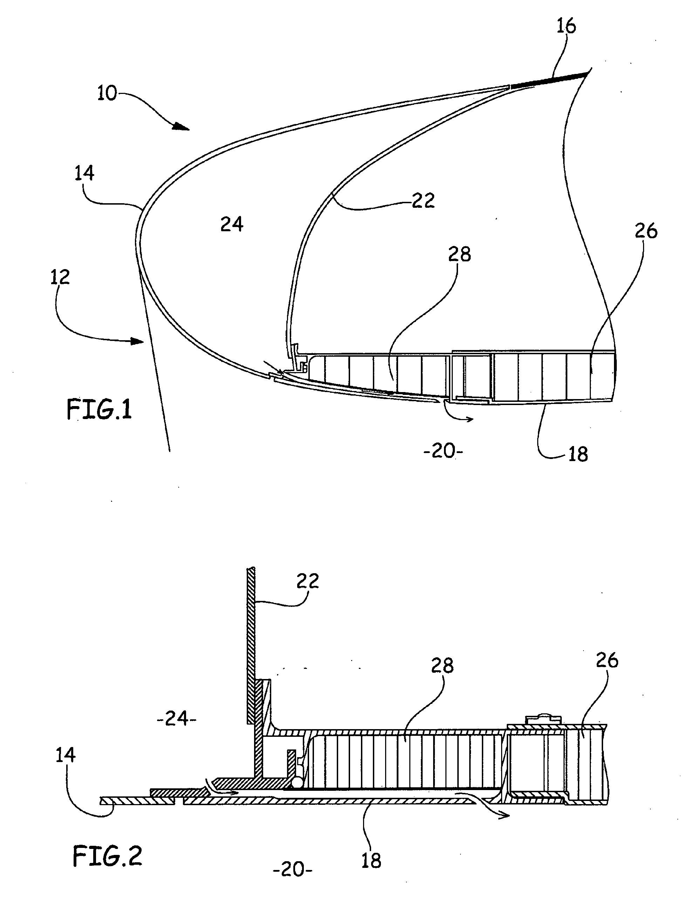

Comme illustré sur la figure 1, une nacelle 10 comprend à l'avant une entrée d'air 12 permettant de canaliser un flux d'air en direction de la motorisation. Selon une coupe longitudinale (contenant l'axe de rotation de la motorisation), une entrée d'air 12 comprend une lèvre 14 prolongée à l'extérieur de la nacelle par une paroi extérieure 16 et à l'intérieur par la paroi intérieure 18 définissant un conduit intérieur 20 permettant de canaliser l'air en direction de la motorisation.

La nacelle comprend également un cadre avant 22 qui délimite avec la lèvre 14 un conduit annulaire 24 qui peut être utilisé pour canaliser de l'air chaud pour le traitement du givre.

Pour limiter l'impact des nuisances sonores, des techniques ont été développées pour réduire le bruit interne, notamment en disposant, au niveau des parois du conduit intérieur 20, des panneaux ou revêtements visant à absorber une partie de l'énergie sonore, notamment en utilisant le principe des résonateurs d'Helmholtz.

Pour optimiser le traitement acoustique, ces panneaux doivent recouvrir la plus grande surface. Certains panneaux 26 pour le traitement acoustique peuvent recouvrir le conduit intérieur 20, ces derniers distants du cadre avant ne comportant pas la fonction du traitement du givre. D'autres peuvent être disposés dans le conduit annulaire 24 à l'avant du cadre 22 et combiner les fonctions du traitement acoustique et du traitement du givre. Enfin, un panneau 28 pour le traitement acoustique avec des matériaux résistants à la chaleur peut être intercalé entre le cadre avant 22 et les panneaux 26. Ce panneau 28 intègre également la fonction du traitement du givre et comprend des moyens pour capter l'air chaud dans le conduit annulaire 24 et le rejeter à l'arrière dans le conduit intérieur 20.

Un tel panneau combinant les fonctions du traitement acoustique et du traitement du givre est notamment décrit dans le brevet FR-2.917.067. Il comprend de l'extérieur vers l'intérieur une couche acoustiquement résistive, au moins une structure alvéolaire et une couche réflectrice, ainsi que des canaux délimités chacun par une paroi intercalée entre la couche acoustiquement résistive et la structure alvéolaire.

Cette solution permet de limiter les risques de communication entre l'intérieur des canaux et les cellules de la structure alvéolaire, et donc les risques de perturbation du traitement acoustique.

Selon un autre avantage, l'air chaud occupe un volume nettement inférieur par rapport aux solutions antérieures selon lesquelles il occupe le volume de certaines cellules de la structure alvéolaire, ce qui permet d'obtenir d'une part une meilleure concentration de l'air chaud contre la paroi à dégivrer renforçant l'efficacité du dégivrage, et d'autre part, une pression pneumatique plus élevée limitant le risque d'une pression à l'intérieur de la structure inférieure à celle de l'extérieur et donc la pénétration de l'air extérieur à l'intérieur du système de dégivrage.

Selon un autre avantage, l'air chaud est en contact permanent avec la peau à dégivrer, ce qui permet d'améliorer les échanges et de réduire la température de l'air chaud refoulé en sortie du système de dégivrage, ce qui permet de le rejeter sans risque de brûlures de la paroi traversée, notamment lorsque cette dernière est réalisée en un matériau sensible à la chaleur tel que le composite. En général, chaque canal prévu pour canaliser l'air chaud communique à une première extrémité avec le conduit annulaire et débouche via un orifice de sortie dans le conduit intérieur 20. Ces canaux s'étendent selon la direction longitudinale et sont répartis sur toute la circonférence du conduit intérieur 20. Au niveau du conduit annulaire 24, l'air chaud est injecté généralement en un point de la circonférence et circule dans le conduit annulaire, en y faisant plusieurs tours. Des moyens sont prévus pour homogénéiser la température de l'air à l'intérieur du conduit annulaire. Toutefois, il subsiste des gradients de température si bien que les canaux du panneau 28 ne véhiculent pas tous de l'air à la même température. Par conséquent, le traitement du givre n'est pas homogène sur toute la circonférence du conduit intérieur 20. Selon une autre problématique, compte tenu des disparités des températures de l'air d'un canal à l'autre, la température de l'air en sortie de certains canaux peut être nettement supérieure à la température de l'air d'autres sorties et être supérieure aux températures tolérées par les matériaux composants le panneau pour le traitement acoustique 26, de préférence en matériau composite, disposé à l'arrière du panneau 28.

Selon une autre contrainte, les sorties des canaux débouchant dans le conduit intérieur 20 ne sont pas soumises à la même pression. Par conséquent, le débit de chaque canal étant étroitement lié à la différence de pression entre son entrée et sa sortie, les débits ne sont pas les mêmes d'un canal à l'autre ce qui induit des disparités pour le traitement du givre sur la circonférence du conduit intérieur 20.

Pour rendre le traitement du givre homogène, une solution consiste à augmenter la densité des canaux dans les zones à températures et/ou débits dits faibles et par conséquent à réduire le pas entre les canaux et à les espacer dans les zones où les températures sont plus élevées et/ou les débits sont plus importants. Cette solution n'est pas satisfaisante car elle conduit à complexifier le panneau 28 et à réduire les capacités du traitement acoustique dans les zones où les canaux sont faiblement espacés. De plus, cette solution ne résout pas le problème lié aux températures de sortie trop élevées.

Aussi, la présente invention vise à pallier les inconvénients de l'art antérieur en proposant un panneau pour le traitement acoustique intégrant la fonction du traitement du givre et permettant d'homogénéiser le traitement du givre sur la circonférence du conduit intérieur.

A cet effet, l'invention a pour objet une nacelle d'aéronef comprenant une lèvre prolongée par un conduit intérieur formant une entrée d'air, un cadre avant délimitant avec ladite lèvre un conduit annulaire dans lequel circule de l'air chaud ainsi qu'un panneau pour le traitement acoustique comportant de l'extérieur vers l'intérieur une couche acoustiquement résistive, au moins une structure alvéolaire et une couche réflectrice ainsi que des canaux permettant de canaliser de l'air chaud avec chacun une entrée communiquant avec le conduit annulaire et une sortie communiquant avec le conduit intérieur, **caractérisée en ce que** le panneau pour le traitement acoustique comprend au moins une chambre de stabilisation sous forme d'un conduit annulaire avec une section supérieure à celle des canaux qui s'étend sur au moins une partie de la circonférence de la nacelle et qui communique avec plusieurs canaux, les entrées et les sorties n'étant pas alignées selon la direction longitudinale.

Cet agencement contribue à obtenir un meilleur brassage de l'air chaud.

D'autres caractéristiques et avantages ressortiront de la description qui va suivre de l'invention, description donnée à titre d'exemple uniquement, en regard des dessins annexés sur lesquels :
- la figure 1 est une coupe longitudinale d'une partie d'une entrée d'air selon l'art antérieur,
- la figure 2 est une coupe illustrant en détails un panneau pour le traitement acoustique selon l'art antérieur,
- la figure 3 est une coupe d'une partie d'une entrée d'air selon l'invention,
- la figure 4A est une coupe longitudinale selon un premier plan de coupe d'un panneau pour le traitement acoustique selon l'invention,
- la figure 4B est une coupe longitudinale selon un deuxième plan de coupe d'un panneau pour le traitement acoustique selon l'invention,
- la figure 5 est une coupe transversale selon un premier plan de coupe d'un panneau pour le traitement acoustique selon l'invention,
- la figure 6 est une coupe transversale selon un deuxième plan de coupe d'un panneau pour le traitement acoustique selon l'invention,
- la figure 7A est une coupe longitudinale illustrant en détails une chambre de stabilisation disposée à l'arrière du panneau pour le traitement acoustique selon l'invention,
- la figure 7B est un schéma illustrant la répartition selon la circonférence des canaux d'air chaud et des sorties du panneau pour le traitement acoustique selon l'invention,
- la figure 8 est une coupe longitudinale illustrant en détails un mode de réalisation d'une chambre de stabilisation prévue à l'avant d'un panneau pour le traitement acoustique,
- la figure 9 est une coupe transversale d'un mode de réalisation des entrées des canaux d'un panneau pour le traitement acoustique de l'invention,
- la figure 10 est une vue depuis l'intérieur du conduit annulaire d'un autre mode de réalisation des entrées des canaux d'un panneau pour le traitement acoustique de l'invention,
- la figure 11 est une coupe transversale du mode de réalisation illustré sur la figure 10,
- la figure 12 est une coupe longitudinale d'un autre mode de réalisation des entrées des canaux d'un panneau pour le traitement acoustique de l'invention,
- la figure 13 est une coupe selon la circonférence des entrées des canaux illustrées sur la figure 12, et
- la figure 14 est une coupe selon la circonférence d'une variante du mode de réalisation illustré sur la figure 13.

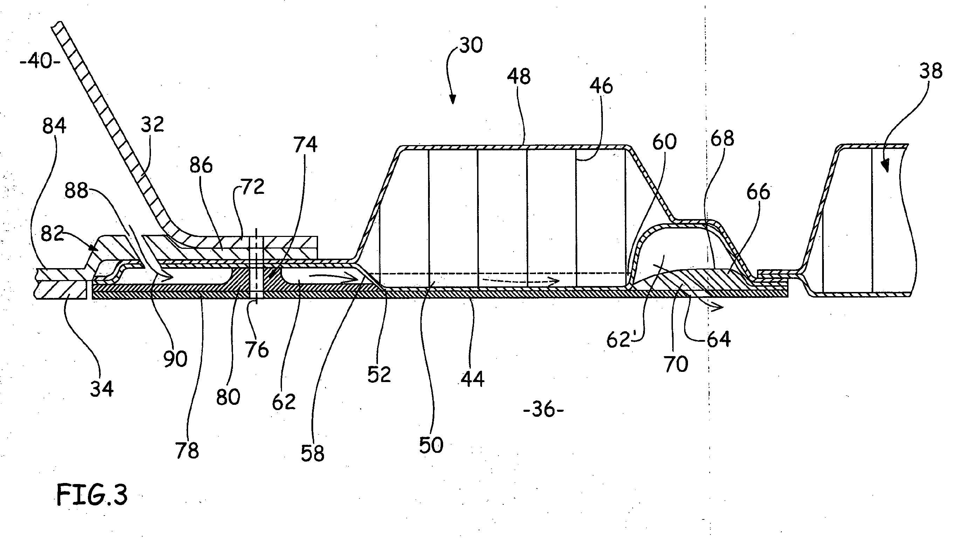

Sur la figure 3, on a illustré un panneau 30 pour le traitement acoustique disposé à l'arrière d'un cadre avant 32 d'une entrée d'air dont une partie de la lèvre 34 et l'avant du conduit intérieur 36 sont représentés. Avantageusement, à l'arrière du panneau 30, le conduit intérieur 36 est délimité par un panneau pour le traitement acoustique 38 sans traitement du givre généralement en matériau composite.

Pour la suite de la description, un plan longitudinal est un plan contenant l'axe longitudinal correspondant approximativement à l'axe de rotation de la motorisation. Un plan transversal est un plan perpendiculaire à l'axe longitudinal. De plus, l'avant du panneau 30 correspond à la partie du panneau orientée vers la lèvre alors que l'arrière du panneau 30 correspond à la partie orientée vers la sortie de la nacelle.

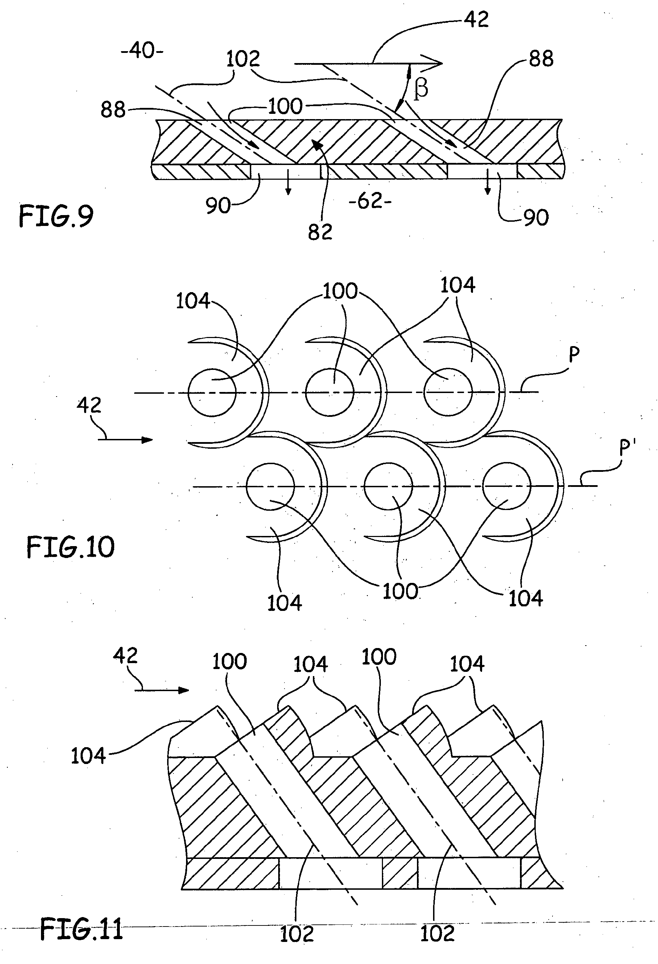

Selon l'invention, pour assurer le traitement du givre, de l'air chaud est injecté dans un conduit annulaire 40 délimité par la lèvre 34 et le cadre avant 32. L'air chaud s'écoule dans le conduit annulaire en effectuant approximativement un mouvement de rotation autour de l'axe longitudinal, selon un sens matérialisé par les flèches 42 sur les figures 9, 10, 11, 13 et 14.

Pour la suite de la description, le panneau pour le traitement acoustique 38, le cadre avant, la lèvre, les moyens pour injecter l'air chaud dans le conduit annulaire ne sont pas plus détaillés car ils sont connus de l'homme du métier.

De manière connue, le panneau pour le traitement acoustique 30 comprend de l'extérieur vers l'intérieur une couche acoustiquement résistive 44, au moins une structure alvéolaire 46 et une couche réflectrice 48 et des canaux 50 qui s'étendent depuis l'avant du panneau jusqu'à l'arrière du panneau. Avantageusement, les canaux 50 sont délimités par au moins une paroi intercalée entre la couche acoustiquement résistive 44 et la structure alvéolaire 46.

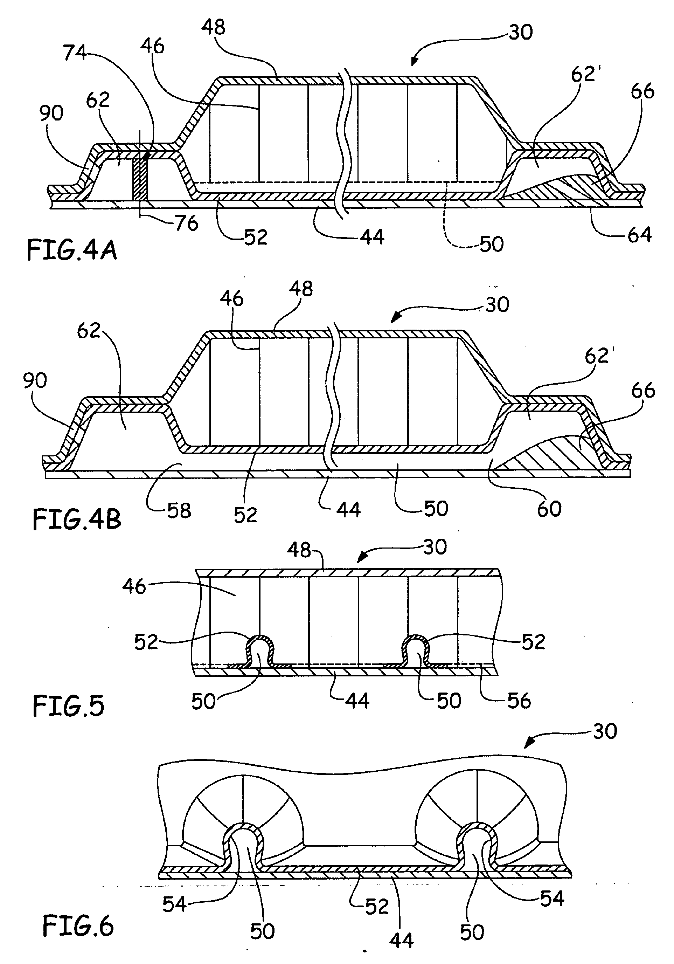

Selon un mode de réalisation, les canaux 50 sont réalisés comme décrits dans le document FR-2.917.067. Néanmoins, l'invention n'est pas limitée au mode de réalisation illustré dans ce document. Ainsi, une paroi 52 peut être mise en forme avec des sillons 54 de manière à délimiter une fois plaquée contre la couche acoustiquement résistive 44 les canaux 50. Cette paroi 52 peut comprendre des évidements 56 entre les canaux 50 pour réduire l'épaisseur de matière traverser par les ondes acoustiques, comme illustré sur la figure 5.

La mise en forme de la paroi 52, l'assemblage de la couche acoustiquement résistive 44 et de la paroi 52, le mode de réalisation des évidements 56 et l'assemblage de la structure alvéolaire et de la couche réflectrice ne sont pas plus détaillés car différentes solutions techniques peuvent être envisagées. Selon un mode de réalisation, les canaux 50 s'étendent approximativement selon la direction longitudinale. En variante, les canaux 50 pourraient avoir une forme d'hélice.

Chaque canal 50 comprend une entrée 58 reliée au conduit annulaire 40 et une sortie 60 reliée au conduit intérieur 36.

Selon l'invention, plusieurs entrées 58 ou plusieurs sorties 60 sont reliées à une chambre de stabilisation 62.

Avantageusement, les entrées 58 et/ou les sorties 60 des canaux débouchent dans la ou les chambres 62, 62' avec une forme évasée.

De préférence, une chambre de stabilisation 62 comprend un conduit annulaire qui s'étend sur au moins une partie de la circonférence de la nacelle. Avantageusement, la chambre de stabilisation 62 s'étend sur toute la périphérie de la nacelle.

La chambre de stabilisation 62 aval comprend au moins une entrée lui permettant de communiquer avec le conduit annulaire 40 pour capter l'air chaud et plusieurs sorties, une pour chaque canal 50.

Pour assurer un brassage satisfaisant et réduire les disparités de température et/ou de pression le long de la circonférence, la chambre de stabilisation 62 a une section supérieure ou égale à la section d'un canal. Avantageusement, la section de la chambre de stabilisation est supérieure ou égale à 1,5 fois la section d'un canal 50. De préférence, la chambre de stabilisation 62 a une hauteur supérieure ou égale au double de la hauteur d'un canal 50. De préférence, la chambre de stabilisation a une section trapézoïdale dans un plan longitudinal, la grande base étant orientée vers la couche acoustiquement résistive 44.

Selon l'invention, la chambre de stabilisation comprend plusieurs entrées reliées au conduit annulaire 40 et plusieurs sorties reliées aux canaux 50 et les entrées et les sorties ne sont pas alignées selon la direction longitudinale mais décalées selon la circonférence. Cet agencement contribue à obtenir un meilleur brassage de l'air chaud et à homogénéiser sa température et sa pression avant qu'il ne traverse les canaux 50.

De préférence, on peut prévoir une chambre de stabilisation 62 en amont des canaux 50 et/ou une chambre de stabilisation 62' en aval des canaux 50.

Selon un mode de réalisation, chaque chambre de stabilisation 62, 62' est délimitée par une paroi et la couche acoustiquement résistive 44. Avantageusement, les chambres de stabilisation 62, 62' et les canaux 50 sont délimités par la même paroi 52. Cette paroi est mise en forme par tous moyens appropriés, notamment par formage.

Selon un mode de réalisation, la paroi 52 est en contact avec la couche acoustiquement résistive 44 en amont de la chambre de stabilisation 62 disposée en amont des canaux 50 et en aval de la chambre de stabilisation 62' disposée en aval des canaux 50. En complément, la couche réflectrice 48 est plaquée contre la paroi 52 au niveau des chambres de stabilisation 62, 62'.

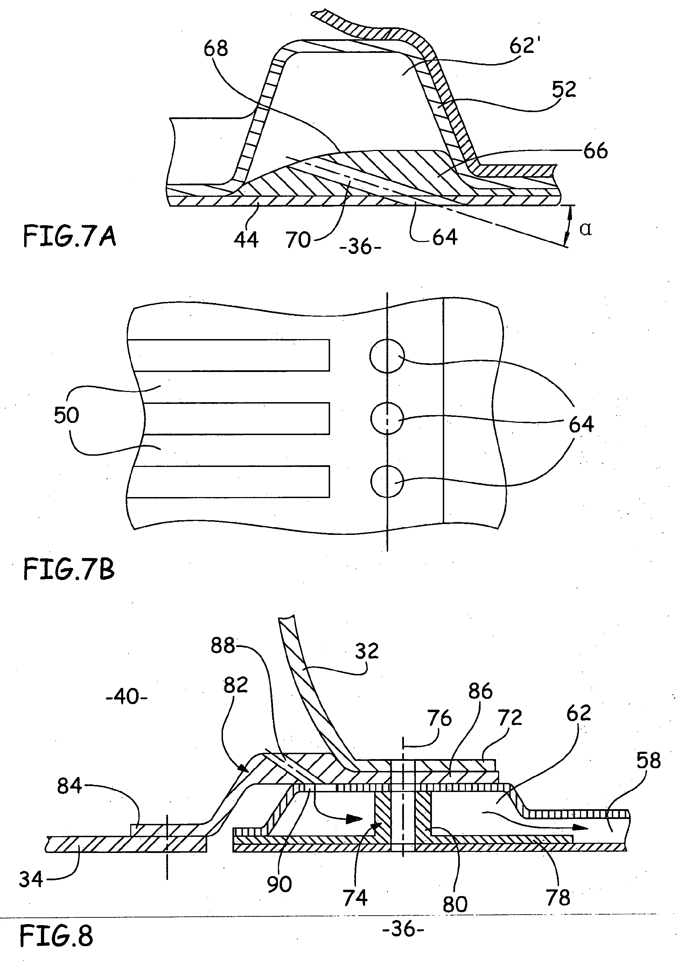

Au niveau de la chambre de stabilisation 62' prévue en aval des canaux, la couche acoustiquement résistive 44 comprend des orifices 64. Comme illustré sur la figure 7B, pour assurer une meilleure homogénéisation de la température et des pressions, les orifices de sortie 64 ne sont pas alignés avec les canaux 50 mais décalés. De préférence, un orifice de sortie 64 est disposé entre deux zones situées dans le prolongement de canaux adjacents.

Avantageusement, la chambre de stabilisation 62' comprend des moyens pour permettre d'incliner le flux d'air sortant des orifices de sortie 64 et limiter ainsi les perturbations du flux d'air circulant dans le conduit intérieur 36. A cet effet, le panneau comprend une cale 66 plaquée contre la surface intérieure de la couche acoustiquement résistive 44 et dont la surface supérieure 68 délimite avec la paroi 52 la chambre de stabilisation 62'. La calle 66 comprend pour chaque orifice de sortie 64 un conduit 70 permettant de faire communiquer la chambre de stabilisation 62' avec l'orifice de sortie 64 correspondant. Avantageusement, chaque conduit 70 forme un angle a inférieur à 50° avec la surface extérieure de la couche acoustiquement résistive située après l'orifice de sortie correspondant.

Pour faciliter l'écoulement de l'air, la surface supérieur 68 de la cale 66 comprend en amont une forme en biseau au niveau de laquelle débouchent les conduits 70.

Pour simplifier le circuit d'air et réduire au maximum les surfaces non traitées sur le plan acoustique, le panneau acoustique selon l'invention est relié au cadre avant au niveau de la chambre de stabilisation 62.

A cet effet, le cadre avant 32 comprend un bord 72 recourbé vers l'arrière plaqué conte la surface intérieure de la couche réflectrice 48, elle-même plaquée contre la paroi 52 au droit de la chambre de stabilisation 62 disposée en amont des canaux 50. Pour limiter les risques d'écrasement de la chambre de stabilisation 62, au moins une cale 74 est disposée dans la chambre de stabilisation 62 au droit de chaque moyen 76 assurant la liaison entre le cadre avant 32 et le panneau pour le traitement acoustique 30 selon l'invention. Dans un plan transversal, les cales 74 sont espacées le long de la circonférence de manière à permettre le passage de l'air chaud entre le conduit annulaire 40 et les canaux 50.

Selon un mode de réalisation simplifié, chaque cale 74 se présente sous la forme d'un tube dont l'axe est aligné avec celui du moyen de liaison 76, sa hauteur étant égale à la hauteur de la chambre de stabilisation 62.

En variante, pour simplifier l'assemblage, le panneau peut comprendre au niveau de la chambre de stabilisation 62 disposée en amont des canaux une bande de matière 78 qui s'étend sur au moins une partie de la circonférence, plaquée contre la couche acoustiquement résistive 44 et comportant pour chaque moyen de liaison 76 un bossage 80 sous forme d'un cylindre creux assurant la fonction de cale 74. Ainsi, selon ce mode de réalisation, plusieurs cales 74 sont reliées par la bande de matière 78.

De préférence, le panneau pour le traitement acoustique 30 est relié à la paroi délimitant la lèvre 34.

A cet effet, une pièce annulaire 82 assure la liaison entre d'une part la paroi délimitant la lèvre 34, et d'autre part, le panneau acoustique 30 et avantageusement le cadre avant 32.

Selon les cas, la pièce annulaire 82 peut être d'un seul tenant et s'étendre sur toute la périphérie de la nacelle ou être obtenue à partir d'un assemblage de plusieurs secteurs angulaires.

Selon un mode de réalisation illustré notamment sur la figure 8, la pièce annulaire 82 comprend à une première extrémité une première partie 84 sous forme d'une bande annulaire plaquée et fixée contre la surface intérieure de la paroi formant la lèvre 34, et à l'autre extrémité, une seconde partie 86 sous forme d'une bande intercalée entre le bord recourbé 72 du cadre avant 32 et la paroi délimitant la cavité de stabilisation 62 du panneau acoustique 30, la seconde partie 86 étant décalée radialement vers l'extérieur par rapport à la première partie 84 de manière à ce que la surface extérieure du panneau acoustique 30 soit dans le prolongement de la surface extérieure de la paroi délimitant la lèvre 34.

Cette pièce annulaire 82 comprend plusieurs conduits 88 permettant de faire communiquer le conduit annulaire 40 avec les entrées 90 de la chambre de stabilisation 62 située en amont du panneau acoustique 30.

Quel que soit le panneau pour le traitement acoustique 30, l'entrée d'air comprend au moins un conduit permettant de canaliser l'air chaud depuis le conduit annulaire 40 jusqu'au panneau pour le traitement acoustique 30.

Selon une première variante, illustré sur les figures 8 à 11, la pièce annulaire 82 précédemment décrite comprend des conduits 88.

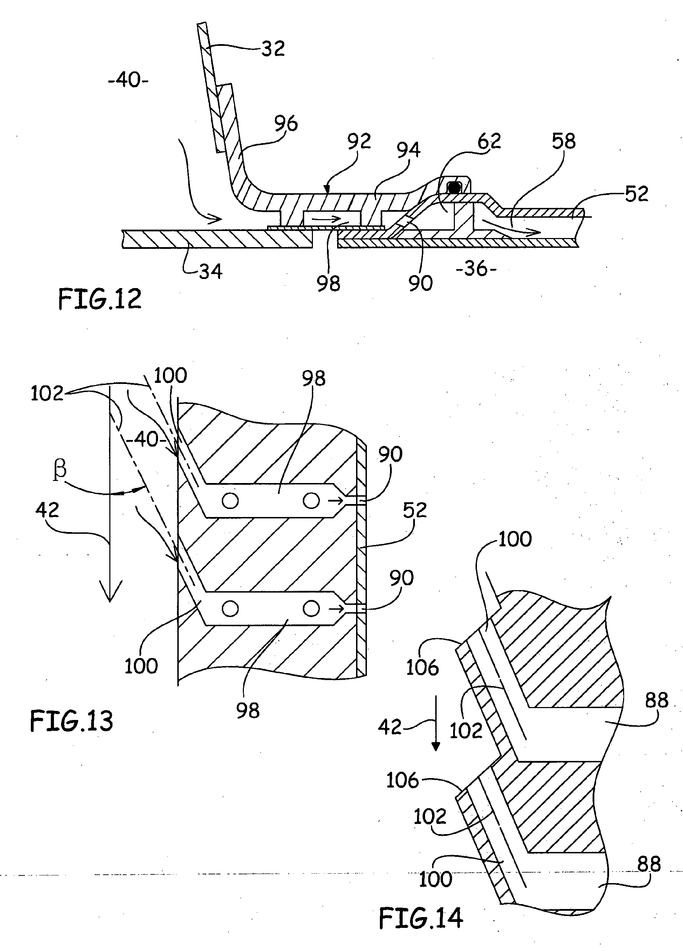

Selon une autre variante, illustrée sur les figures 12 et 14, une pièce intercalaire 92 peut assurer la jonction entre le cadre avant 32, la paroi délimitant la lèvre 34 et le panneau acoustique 30. Cette pièce intercalaire 92 comprend un corps annulaire 94 avec à l'avant une plaque recourbée 96 susceptible d'être plaquée et fixée contre la face arrière du cadre avant 32. Selon cette variante, la paroi délimitant la lèvre 34 et l'extrémité avant du panneau acoustique sont plaquées et fixées à la face intérieure (celle orientée vers l'axe longitudinal de la nacelle) par tous moyens appropriés. Le corps annulaire 94 comprend au niveau de sa face intérieure des formes en creux qui délimitent des conduits 98.

Cependant, l'invention n'est pas limitée à ces deux variantes pour les conduits susceptibles d'acheminer l'air chaud depuis le conduit annulaire vers le panneau pour le traitement acoustique. Ainsi, d'autres formes de conduits ou d'autres solutions pour délimiter un conduit pourraient être envisagées.

Chaque conduit d'alimentation 88 et 98 comprend une portion dite embouchure 100 qui débouche dans le conduit annulaire 40.

Selon l'invention, l'embouchure 100 permet de canaliser l'air chaud selon une direction référencée 102 qui forme un angle β inférieur à 60° avec la direction 42 d'écoulement de l'air chaud dans le conduit annulaire. Cet agencement assure de capter un plus grand débit d'air chaud.

Selon des variantes illustrées notamment sur les figures 9 à 11, les conduits 88 ont une embouchure 100 dont la direction 102 est contenue dans un plan perpendiculaire à l'axe longitudinal de la nacelle.

Selon une première variante illustrée sur la figure 9, les embouchures 100 sont disposées dans un même plan transversal.

Selon une autre variante illustrée sur les figures 10 et 11, les embouchures 100 sont disposées dans au moins deux plans transversaux P, P'. De préférence, les embouchures 100 sont réparties sur deux plans P, P' et disposées en quinconce. Selon un mode de réalisation préférentiel, les embouchures 100 débouchent au niveau de surfaces 104 sécantes avec la direction 42 d'écoulement de l'air chaud dans le conduit annulaire. Avantageusement, les surfaces 104 sont perpendiculaires à la direction 102 des conduits.

Selon d'autres variantes illustrées notamment sur les figures 13 et 14, les conduits 88 et 98 ont une embouchure 100 dont la direction 102 est sécante avec le plan perpendiculaire à l'axe longitudinal de la nacelle et sensiblement tangente à la circonférence du conduit interne de la nacelle. Dans ce cas, les embouchures 100 sont disposées au niveau de la surface intérieure de la paroi délimitant la lèvre 34. Selon un mode de réalisation, pour former les conduits, une pièce est plaquée contre la face intérieure de la paroi délimitant la lèvre 34, ladite pièce comportant des rainures qui délimitent chacune un conduit. La paroi délimitant la lèvre 34 étant courbe, une composante de la direction 102 de l'embouchure 100 des conduits est orientée vers l'axe longitudinale de la nacelle. Selon un mode de réalisation illustré sur la figure 13, les embouchures 100 sont disposées dans un plan parallèle à la direction 42 d'écoulement de l'air chaud dans le conduit annulaire.

Selon un autre mode de réalisation illustré sur la figure 14, les embouchures 100 débouchent au niveau de surfaces 106 sécantes avec la direction 42 d'écoulement de l'air chaud dans le conduit annulaire. Avantageusement, les surfaces 106 sont perpendiculaires à la direction 102 des conduits.

## Revendications

1. Nacelle d'aéronef comprenant une lèvre (34) prolongée par un conduit intérieur (36) formant une entrée d'air, un cadre avant (32) délimitant avec ladite lèvre (34) un conduit annulaire (40) dans lequel circule de l'air chaud ainsi qu'un panneau pour le traitement acoustique comportant de l'extérieur vers l'intérieur une couche acoustiquement résistive (44), au moins une structure alvéolaire (46) et une couche réflectrice (48) ainsi que des canaux (50) permettant de canaliser de l'air chaud avec chacun une entrée communiquant avec le conduit annulaire (40) et une sortie communiquant avec le conduit intérieur (36), le panneau pour le traitement acoustique (30) comprend au moins une chambre de stabilisation (62, 62') sous forme d'un conduit annulaire avec une section supérieure à celle des canaux (50) qui s'étend sur au moins une partie de la circonférence de la nacelle **caractérisée en ce que** la chambre de stabilisation comprend plusieurs entrées qui communiquent avec le conduit annulaire (40) et plusieurs sorties qui communiquent chacune avec un canal (50), les entrées et les sorties n'étant pas alignées selon la direction longitudinale.

2. Nacelle d'aéronef selon la revendication 1, **caractérisée en ce qu'**il comprend une chambre de stabilisation (62) en amont des canaux (50) et une chambre de stabilisation en aval des canaux (50).

3. Nacelle d'aéronef selon la revendication 1 ou 2, **caractérisée en ce que** la chambre de stabilisation (62, 62') a une section supérieure ou égale à 1,5 fois la section d'un canal (50).

4. Nacelle d'aéronef selon l'une quelconque des revendications 1 à 3, **caractérisée en ce que** la chambre de stabilisation (62, 62') a une section trapézoïdale dans un plan longitudinal, la grande base étant orientée vers la couche acoustiquement résistive (44).

5. Nacelle d'aéronef selon l'une quelconque des revendications précédentes, **caractérisée en ce qu'**une chambre de stabilisation (62') est prévue en aval des canaux (50) avec des moyens pour incliner le flux d'air sortant dans le conduit intérieur (36).

6. Nacelle d'aéronef selon la revendication 5, **caractérisée en ce que** le panneau acoustique comprend une cale (66) disposée dans la chambre de stabilisation (62') disposée en aval des canaux et plaquée contre la couche acoustiquement résistive (44) dans laquelle sont ménagés des orifices de sortie (64), ladite cale comprenant pour chaque orifice de sortie (64) un conduit (70) formant un angle a inférieur à 50° avec la surface extérieure de la couche acoustiquement résistive (44) située après l'orifice de sortie (64) correspondant.

7. Nacelle d'aéronef selon la revendication 6, caractérisée en ce la surface supérieur (68) de la cale (66) comprend en amont une forme en biseau au niveau de laquelle débouchent les conduits (70).

8. Nacelle d'aéronef selon l'une quelconque des revendications précédentes, **caractérisée en ce que** la ou les chambres de stabilisation (62, 62') et les canaux (50) sont délimités par une même paroi (52) mise en forme et plaquée contre la couche acoustiquement résistive.

9. Nacelle d'aéronef selon l'une quelconque des revendications précédentes, **caractérisée en ce que** les entrées (58) et/ou les sorties (60) des canaux (50) débouchent dans la ou les chambres (62, 62') avec une forme évasée.

## Patentansprüche

1. Gondel eines Luftfahrzeugs mit einem Wulst (34), der durch eine einen Lufteinlass bildende innere Führung (36) verlängert ist, einem vorderen Rahmen (32), der mit dem Wulst (34) eine ringförmige Leitung (40) begrenzt, in der warme Luft zirkuliert, und mit einem Paneel für die Schallbehandlung, das von außen nach innen eine schalldämmende Schicht (44), wenigstens eine Kammerstruktur (46) und eine schallreflektierende Schicht (48) ebenso wie Kanäle (50) aufweist, die es gestatten, warme Luft zwischen jeweils einem in Verbindung mit der ringförmigen Leitung (40) stehenden Einlass und einem in Verbindung mit der inneren Führung (36) stehenden Auslass zu kanalisieren, wobei das Paneel (30) für die Schallbehandlung wenigstens eine Stabilisierungskammer (62, 62') in Gestalt einer ringförmigen Leitung mit einem Querschnitt aufweist, der größer ist als derjenige der Kanäle (50), die sich über wenigstens einen Teil des Umfangs der Gondel erstrecken, **dadurch gekennzeichnet, dass** die Stabilisierungskammer mehrere Einlässe aufweist, die mit der ringförmigen Leitung (40) in Verbindung stehen und mehrere Auslässe, die jeweils in Verbindung mit einem Kanal (50) stehen, wobei die Einlässe und die Auslässe nicht in Längsrichtung ausgerichtet sind.

2. Gondel eines Luftfahrzeugs nach Anspruch 1, **dadurch gekennzeichnet, dass** diese eine Stabilisierungskammer (62) in Strömungsrichtung vor den Kanälen (50) und eine Stabilisierungskammer in Strömungsrichtung hinter den Kanälen (50) aufweist.

3. Gondel eines Luftfahrzeugs nach Anspruch 1 oder 2, **dadurch gekennzeichnet, dass** die Stabilisierungskammer (62, 62') einen Querschnitt aufweist, der größer oder gleich dem 1,5-fachen des Querschnitts eines Kanals (50) ist.

4. Gondel eines Luftfahrzeugs nach einem der Ansprüche 1 bis 3, **dadurch gekennzeichnet, dass** die Stabilisierungskammer (62, 62') in einer Längsebene einen trapezförmigen Querschnitt aufweist, dessen Grundlinie zu der schalldämpfenden Schicht (44) weist.

5. Gondel eines Luftfahrzeugs nach einem der vorhergehenden Ansprüche, **dadurch gekennzeichnet, dass** eine Stabilisierungskammer (62') in Strömungsrichtung hinter den Kanälen (50) mit Mitteln ausgestattet ist, um den in die innere Führung (36) austretenden Luftstrom zu neigen.

6. Gondel eines Luftfahrzeugs nach Anspruch 5, **dadurch gekennzeichnet, dass** das Schallpaneel einen Keil (66) aufweist, der in der Stabilisierungskammer (62') angeordnet ist, die in Strömungsrichtung hinter den Kanälen angeordnet ist, und der an die schalldämpfende Schicht (44) angesetzt ist, in der Ausgangsöffnungen (64) ausgebildet sind, wobei der Keil für jede Ausgangsöffnung (64) eine Leitung (70) aufweist, die einen Winkel α kleiner 50° mit der äußeren Oberfläche der schalldämpfenden Schicht (44) bildet, die sich hinter der entsprechenden Ausgangsöffnung (64) befindet.

7. Gondel eines Luftfahrzeugs nach Anspruch 6, **dadurch gekennzeichnet, dass** die äußere Oberfläche (68) des Keils (66) auf der Anströmseite eine Schrägfläche aufweist, in deren Bereich die Leitungen (70) münden.

8. Gondel eines Luftfahrzeugs nach einem der vorhergehenden Ansprüche, **dadurch gekennzeichnet, dass** die Stabilisierungskammer oder -kammern (62, 62') und die Kanäle (50) durch dieselbe Wand (52) begrenzt sind, die an die schalldämpfende Schicht angeformt und angesetzt ist.

9. Gondel eines Luftfahrzeugs nach einem der vorhergehenden Ansprüche, **dadurch gekennzeichnet, dass** die Einlässe (58) und/oder die Auslässe (60) der Kanäle (50) in die Kammer oder die Kammern (62, 62') mit einer erweiterten Form münden.

## Claims

1. Aircraft nacelle comprising lip (34) extended by an inner conduit (36) forming an air intake, a front frame (32) defining with said lip (34) annular channel (40) within which hot air flows and a panel for acoustic treatment comprising, from outside inwardly, acoustic resistive layer (44), at least one honeycomb structure (46) and a reflective layer (48), and ducts (50) for channeling hot air, with each duct having an inlet communicating with annular channel (40) and an outlet communicating with inner conduit (36), the panel for acoustic treatment (30) comprising at least one stabilization chamber (62, 62') in the form of an annular channel with a cross-section greater than that of ducts (50) which extends over at least a portion of the nacelle circumference, **characterized in that** the stabilization chamber comprises a plurality of inlets in communication with annular channel (40) and a plurality of outlets each communicating with one duct (50), inlets and outlets not being aligned with the longitudinal direction.

2. Aircraft nacelle according to claim 1, wherein it comprises a stabilization chamber (62) upstream from ducts (50) and a stabilization chamber downstream from ducts (50).

3. Aircraft nacelle according to claim 1 or 2, wherein stabilization chamber (62, 62') has a cross-section greater than or equal to 1.5 times the section of one duct (50).

4. Aircraft nacelle according to any one of claims 1 to 3, wherein stabilization chamber (62, 62') has a trapezoidal cross-section in a longitudinal plane, the large base being oriented toward acoustic resistive layer (44).

5. Aircraft nacelle according to any one of the preceding claims, wherein a stabilization chamber (62') is provided downstream from ducts (50) with means for tilting the flow of exhaust air in inner conduit (36).

6. Aircraft nacelle according to claim 5, wherein the acoustic panel comprises a wedge (66) placed inside stabilization chamber (62') placed downstream from the ducts and pressed against acoustic resistive layer (44) in which output ports (64) are located, said wedge comprising for each output port (64) a conduit (70) forming an angle α of less than 50° with the outer surface of acoustic resistive layer (44) located after matching output port (64).

7. Aircraft nacelle according to claim 6, wherein upper surface (68) of wedge (66) comprises a beveled shape upstream into which conduits (70) open.

8. Aircraft nacelle according to any one of the preceding claims, wherein the stabilization chamber(s) (62, 62') and ducts (50) are delimited by a common wall (52) shaped and pressed against the acoustic resistive layer

9. Aircraft nacelle according to any one of the preceding claims, wherein inlets (58) and/or outlets (60) of ducts (50) open into chamber(s) (62, 62') with a flared shape.
